# EUROPÄISCHE PATENTANMELDUNG

(11) **EP 0 555 174 A1**
(43) Veröffentlichungstag der Anmeldung: **11.08.1993**
(21) Anmeldenummer: 93710002.2
(22) Anmeldetag: 04.02.1993
(51) Int. Cl.: B60D 1/06, B60D 1/32

(54) **Fahrzeug-Anhängerkupplung mit Reibungsbremse**

(30) Priorität: 06.02.1992 DE 4203344
(71) Anmelder: Westfalia-Werke Knöbel GmbH & Co., D-33378 Rheda-Wiedenbrück (DE)
(72) Erfinder: Braun, Dieter, Dipl.-Ing., W-4840 Rheda-Wiedenbrück (DE); Hornemann, Marc, W-4840 Rheda-Wiedenbrück (DE); Kulak, Andreas, Dipl.-Ing., W-4840 Rheda-Wiedenbrück (DE); Pöppelbaum, Adolf, W-4840 Rheda-Wiedenbrück (DE); Strathaus, Jürgen, W-4831 Langenberg (DE)
(74) Vertreter: Müller, Gerd, Dipl.-Ing.

(57) **Zusammenfassung**

Eine Fahrzeuganhängerkupplung mit Reibungsbremse, die aus einer Kupplungskugel (2) und einem, diese umfassenden Kugelkupplungsgehäuse (1) besteht. Ein kugelabschnittsförmiger Teilabschnitt (3) des Kugelkupplungsgehäuses (1) ist über Stellelemente (6, 7) auf einer Entkupplungsposition unter Spanndruck gegen die Kupplungskugel (2) in eine Kupplungsposition und aus dieser zurück bewegbar. In der Kupplungsposition ist der Teilabschnitt (3) zusätzlich mit einstellbarem Druck beaufschlagbar und wirkt dabei als ein Reibungsbremsklotz. Hinter dem Teilabschnitt (3) des Kugelkupplungsgehäuses (1) ist ein Hydraulik-Spannelement (5) angeordnet, das diesen mit seinem Druckglied (5b) beaufschlagt. Mit seinem Gehäuse (5a) ist das Hydraulik-Spannelement (5) ortsfest, längsverschiebbar und schwenkbar im Kugelkupplungsgehäuse (1) angeordnet.

## Beschreibung

Die Erfindung bezieht sich auf eine Fahrzeug-Anhängerkupplung mit Reibungsbremse, bestehend aus einer Kupplungskugel und einem, diese umfassenden Kugelkupplungsgehäuse, bei der ein kugelabschnittsförmiger Teilabschnitt des Kugelkupplungsgehäuses über Stellelemente aus einer Entkupplungsposition unter Spanndruck gegen die Kupplungskugel in eine Kupplungsposition und aus dieser zurück beweg- und in der Kupplungsposition zusätzlich, dabei als Reibungsbremsklotz wirkend, mit einstellbarem Druck beaufschlagbar ist.

Die Wirkung des Teilabschnittes des Kugelkupplungsgehäuses als Reibungsbremsklotz dient dazu, die Schwingungen zu dämpfen, die sich innerhalb der Freiheitsgrade der Bewegungsmöglichkeiten des Kugelkupplungsgehäuses um die Kupplungskugel herum während der Fahrt der gekuppelten Fahrzeuge im Zugbetrieb in Gier-Nick-Wank-Bewegungen, sog. Schlingerbewegungen äußern.

Bei einer bekannten Fahrzeug-Anhängerkupplung dieser Gattung (DE-OS 3 511 301) wird der Teilabschnitt des Kugelkupplungsgehäuses von einem, im Kugelkupplungsgehäuse verschieb- und verriegelbar angeordnetem Gleitkeil beaufschlagt. Dieser Gleitkeil wird über die Stellelemente des Teilabschnittes in und außer Beaufschlagungsposition mit der Rückseite des Teilabschnittes gebracht und kann mit Hilfe von Spindelführungen oder ähnlichen Betätigungselementen in der Beaufschlagungsposition verschoben und eingestellt werden, um den zusätzlichen Reibungsbremsdruckauf den Teilabschnitt aufzubringen; er wird dabei rückseitig von einem fest im Kugelkupplungsgehäuse angeordneten Gleitanschlag abgestützt. Diese Ausbildungsform bringt den wesentlichen Nachteil mit sich, daß der an der Kupplungskugel anliegende Teilabschnitt durch den Gleitkeil starr abgestützt ist. Die im Fahrbetrieb auftretenden Stöße können dabei nicht elastisch abgefangen und gedämpft werden. Eine Nachstellung des Teilabschnitts zum Ausgleich des Reibungsabriebs ist nur beim Stillstand der miteinander gekuppelten Fahrzeuge möglich.

Bei einer weiteren bekanntgewordenen Ausbildungsform einer Fahrzeug-Anhängerkupplung ist der Teilabschnitt des Kugelkupplungsgehäuses pendel-schwenkbar in dem Kugelkupplungsgehäuse aufgehängt und wird rückseitig von einem ebenfalls schwenkbar in dem Kugelkupplungsgehäuse gelagerten Druckstück über aufeinanderliegende Kurvenflächen beaufschlagt. Die Andruckschwenkbewegung des Druckstücks wird dabei durch einstellbare Federelemente abgestützt. Der Nachteil dieser Ausbildungsform besteht einmal in dem erheblichen technischen Aufwand und in den Schwierigkeiten, die die Einstellung und mechanische Übertragung des Federdrucks über das Druckstück auf den Teilabschnitt mit sich bringen.

Der Erfindung liegt die Aufgabe zugrunde, die gattungsgemäße Fahrzeug-Anhängerkupplung mit Reibungsbremse so zu verbessern, daß die oben erwähnten Nachteile vermieden und die Schwierigkeiten beseitigt werden. Diese Aufgabe wird durch ein, hinter dem Teilabschnitt des Kugelkupplungsgehäuses, diesen mit seinem Druckglied direkt oder indirekt beaufschlagendes, mit seinem Gehäuse ortsfest, längsverschiebbar oder schwenkbar im Kugelkupplungsgehäuse angeordnetes Hydraulik-Spannelement gelöst. Ein solches Hydraulik-Spannelement läßt sich sowohl bei direkter als auch bei indirekter Beaufschlagung des Teilabschnittes durch das Druckglied in unmittelbarer Nähe des Teilabschnittes im Kugelkupplungsgehäuse anordnen und direkt mit den Stellelementen für die Kupplungsvorgänge verbinden und benötigt anders, als die bekannten, gattungsgemäßen Ausbildungsformen von Fahrzeug-Anhängerkupplungen keine technisch aufwendigen und auch störanfälligen Gestänge für die Übertragung der Kupplungs- und Reibungsbremskräfte auf den Teilabschnitt.

Wie die Erfindung weiter vorsieht, können ein zwischen dem Teilabschnitt und dem Druckglied des (ortsfesten) Hydraulik-Spannelementes bzw. hinter dem Gehäuse des (längsverschieblichen oder schwenkbaren) Hydraulik-Spannelementes angeordnete, die Andruckflächen des Teilabschnitts bzw. des Hydraulik-Spannelementes beaufschlagende Keilspaltelemente vorgesehen werden, die über die Stellelemente aus einer, den Teilabschnitt, bzw. diesen zusammen (längs verschiebbaren oder schwenkbaren) Hydraulik-Spannelement in die Kupplungsposition drückenden Stellung in eine, den Teilabschnitt für dessen Rückbewegung in die Entkupplungsposition freigebende Stellung und zurück verschiebbar sind.

Wie die Erfindung weiter vorsieht, kann ein von den Stellelementen betätigbares Druckschaltelement vorgesehen werden, das den Spanndruck des Hydraulik-Spannelementes während der Verschiebung der Keilspaltelemente in die Freigabestellung abschaltet.

Zusätzliche Weiterbildungsformen der erfindugnsgemäßen Ausbildung sind in Unteransprüchen niedergelegt.

Die Erfindung wird anhand der in der Zeichnung dargestellten Ausführungsbeispiele näher erläutert. In dieser zeigen
Figur 1 die Fahrzeug-Anhängerkupplung im Längsschnitt nach der Linie C-D durch Fig. 2,
Figur 2 die Draufsicht auf Figur 1,
Figur 3 einen Schnitt nach der Linie A-B durch Figur 1,
Figur 4 ein anderes Ausführungsbeispiel der Fahrzeug-Anhängerkupplung im Längsschnitt,
Figur 5 die Ausbildung nach Figur 4 in einer anderen Betriebsstellung,
Figur 6 und 7 eine andere Ausbildungsform der Fahrzeug-Anhängerkupplung im Längsschnitt in zwei Betriebspositionen,
Figur 8 und 9 eine weitere Ausbildungsform im Längsschnitt in zwei Bertriebspositionen,
Figur 10 und Figur 11 eine weitere Ausbildungsform im Längsschnitt in zwei Betriebspositonen und
Figur 12 die Draufsicht auf Fig. 11.

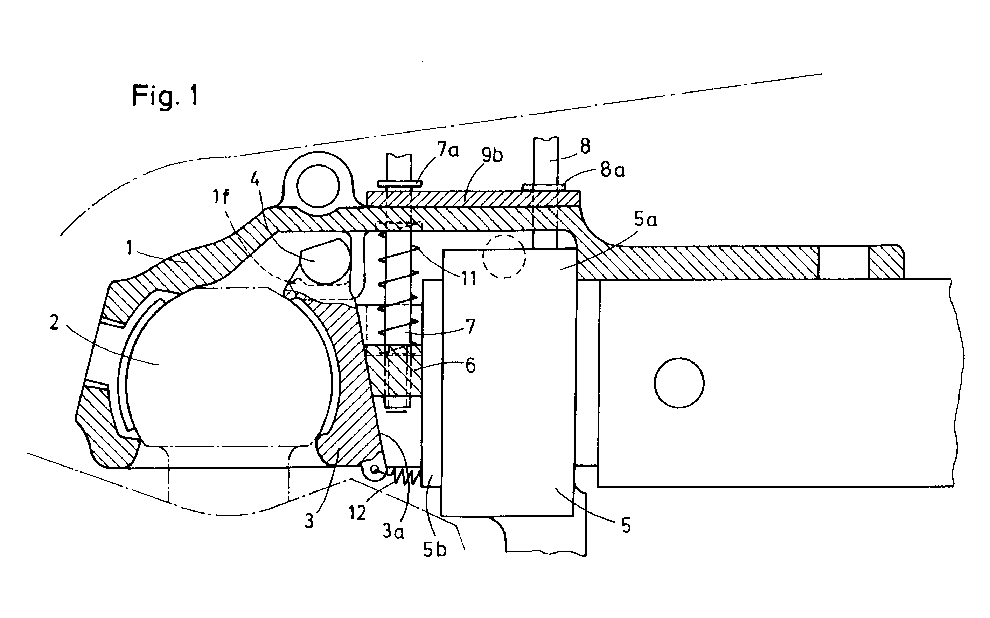

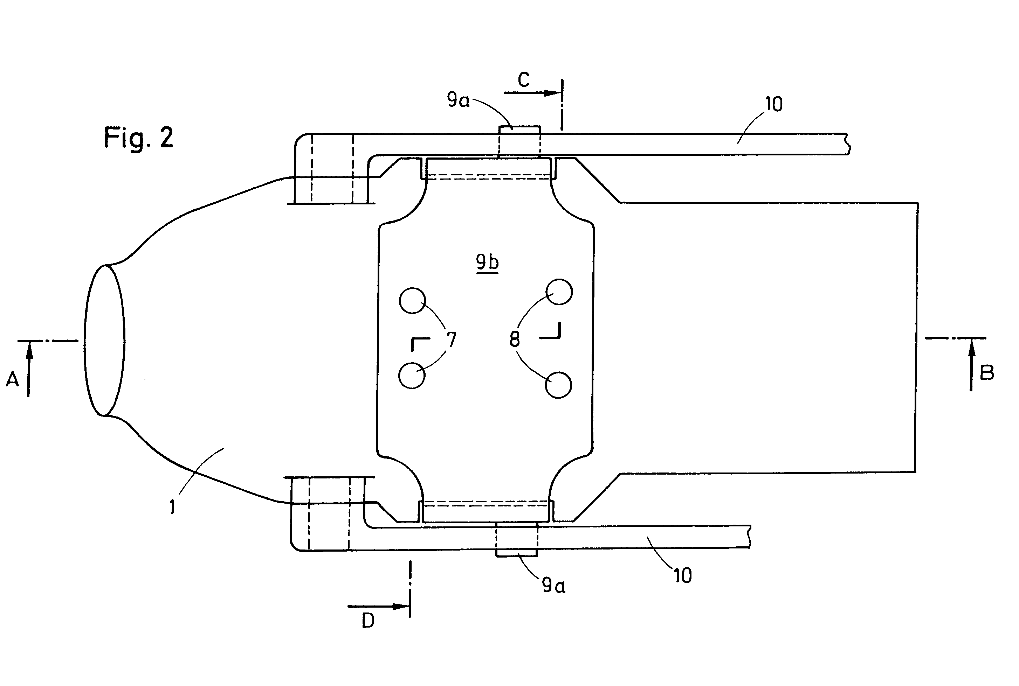

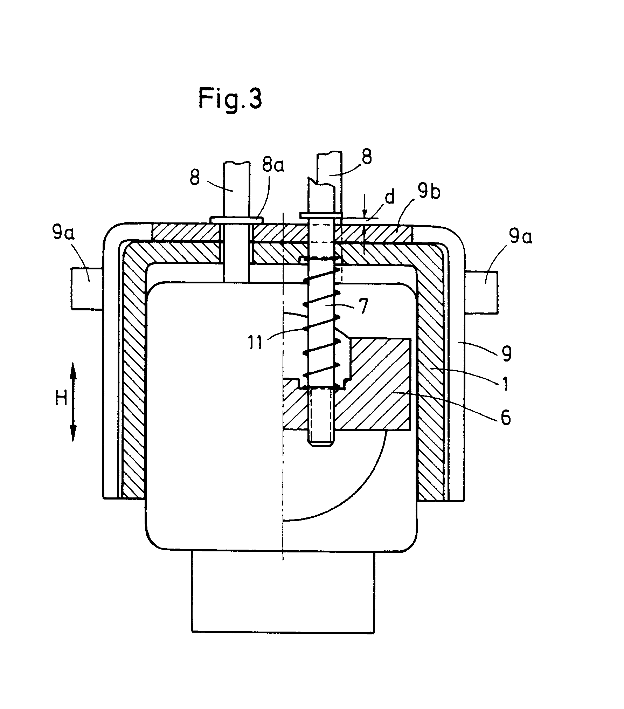

Wie aus den Figuren 1 bis 3 zu ersehen, ist in dem Kugelkupplungsgehäuse 1, das die Kupplungskugel 2 umfaßt, ein kugelabschnittsförmiger Teilabschnitt 3 um eine im oberen Bereich des Gehäuses angelenkte Schwenkachse 4 pendelnd aufgehängt. Diese Schwenkachse 4 liegt dabei quer zu Achslinie verschiebbar in einer Hängeschale 1 h auf.Hinter der Rückwand 3a des Teilabschnitts 3 ist mit Abstand ein Hydraulikspannelement 5 ortsfest angeordnet, das aus dem Gehäuse 5a und dem darin beweglichen Druckglied 5b besteht. Zwischen dem Druckglied 5b und dem Teilabschnitt 3 ist ein Keilspaltelement 6 angeordnet, in das ein bolzenförmiges Schaltstiftpaar 7 (vgl. Fig. 3) eingesetzt ist, das durch im Kugelkupplungsgehäuse 1 vorgesehene Ausnehmungen 1a hindurchgeführt aus dem Gehäuse herausragt. In ähnlicher Weise ist ein Schaltstiftpaar 8 durch Ausnehmungen im Kugelkupplungsgehäuse 1 geführt, das mit einem (nicht dargestellten) Druckschaltelement des Hydraulik-Spannelementes 5 verbunden ist. Ein auf das Kugelkupplungsgehäuse 1 (vgl. Fig. 2 und 3) aufgesetztes U-Winkelstück 9, das über Zapfenansätze 9a mit einem am Kugelkupplungsgehäuse 1 angelenkten Stellhebelpaar 10 verbunden ist, kann mit Hilfe dieser Hebel in Richtung des Doppelpfeils H (Fig. 3) angehoben und abgesenkt werden. Die Schaltstiftpaare 7 und 8 sind durch Ausnehmungen durch den Stegteil 9b des Winkelstücks 9 hindurchgeführt und weisen über der Oberseite dieses Stegteils 9b Mitnehmeranschläge in Form von Ringbunden 7a bzw. 8a auf. In der dargestellten Kupplungsposition der Fahrzeug-Anhängerkupplung, bei der der kugelabschnittförmige Teilabschnitt 3 auf der Oberfläche der Kugelkupplungskugel 2 aufliegt, liegen die Ringbunde 8a der mit dem Druckschaltelement des Hydraulik-Spannelementes 5 verbundenen Schaltstifte 8 auf der Oberseite des Stegteils 9b des U-Winkelstücks 9 auf, während die Ringbunde 7a der in das Keilspaltelement 6 eingesetzten Schaltstifte 7 einen geringen Abstand d von dieser Oberseite aufweisen.

In der dargestellten Kupplungsposition beaufschlagt die Vorderseite des Druckgliedes 5b des Hydraulik-Spannelementes 5 das Keilspaltelement 6, das durch die, den Schaltstift 7 umschließende, gegen die Innenwand des Kugelkupplungsgehäuses 1 abgestützte Feder 11 in seinen Keilsitz zwischen dem Druckglied 5b und der Rückwand 3a des Teilabschnitts 3 gedrückt wird. Das Keilspaltelement 6 beaufschlagt seinerseits die Rückwand 3a und überträgt damit den vom Hydraulik-Spannelement 5 erzeugten Reibungsbremsdruck auf den Teilabschnitt 3 und die Kugelkupplungskugel 2.

Um die Fahrzeug-Anhängerkupplung aus der dargestellten Kupplungsposition in die Entkupplungsposition einzubringen, werden die Stellhebel 10 so nach oben geschwenkt und dadurch das U-Winkelstück 9 von der Oberseite des Kugelkupplungsgehaüses 1 abgehoben. Der Stegteil 9b der U-Winkelstücks 9 hebt dabei zunächst die aufliegenden Ringbunde 8a an mit der Folge, daß die dabei nach oben bewegten Schaltstifte 8 das mit ihnen verbundene Druckschtaltelement des Hydraulik-Spannelementes 5 in der Weise betätigen, daß dieses den Spanndruck des Hydraulik-Spannelementes 5 abschaltet. Mit der Abschaltung des Spanndruckes fällt der Druck des Druckgliedes 5b auf das Keilspannelement 6 weg, und dieses kann, nachdem des Stegteil 9b des U-Winkelstücks 9 die Ringbunde 7a unterfaßt und angehoben hat, über die Schaltstifte 7 in eine (nicht dargestellte) Freigabestellung im Bereich der Schwenkachse 4 bewegt werden, die es der am unteren Ende des Teilabschnitts 3 angreifenden Rückzugfeder 12 erlaubt, den Teilabschnitt 3 in seine (ebenfalls nicht dargestellte) Entkupplungsposition zu schwenken.

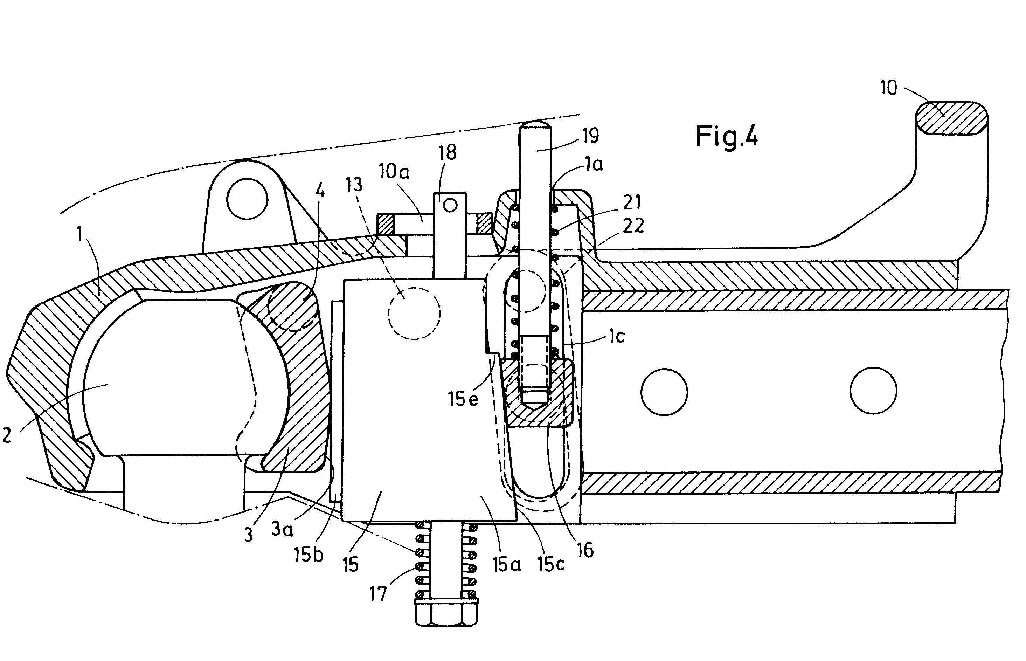

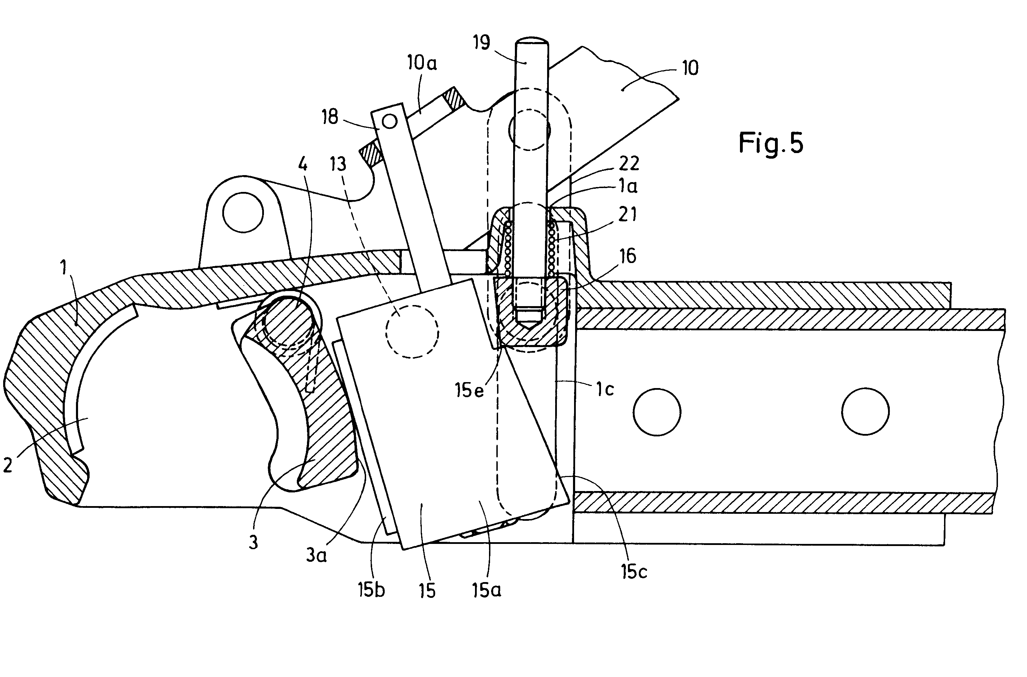

Bei der Ausbildungsform der Fahrzeug-Anhängerkupplung nach den Fig. 4 und 5 umfaßt das Kugelkupplungsgehäuse 1 ebenfalls die Kupplungskugel 2, und der kugelabschnittsförmige Teilabschnitt 3 ist in dem Kugelkupplungsgehäuse 1 um eine Schwenkachse 4 pendelbar aufgehängt. Das Hydraulik-Spannelement 15 ist hinter dem Teilabschnitt 3 um eine zur Schwenkachse 4 parallel verlaufende Achse 13 ebenfalls pendelbar im Kugelkupplungsgehäuse 1 aufgehängt und beaufschlagt die Rückwand 3a des Teilabschnitts 3 direkt. Die schräg verlaufende Rückwand 15c des Gehäuses 15a des Hydraulik-Spannelementes 15 wird von dem hier als Keilklotz ausgebildeten Keilspaltelement 16 beaufschlagt, das in Schlitzführungen 1 c des Kugelkupplungsgehäuses 1 geführt und über Lenker 22 mit den Stellhebeln 10 verbunden ist. Das nicht dargestellte Druckschaltelement des Hydraulik-Spannelementes 15 ist auch hier mit einem Schaltstift 18 verbunden, durch eine Ausnehmung 1a des Kugelkupplungsgehäuses 1 hindurchgeführt mit einem Ansatzstück 10a des Stellhebels 10 lenkverbunden. Der Schaltstift 18 steht, durch das Hydraulik-Spannelement 15 hindurchgeführt, unter der Wirkung einer Feder 17. Aus das Keilspaltelement 16 ist ein Positionsstift 19 aufgesetzt, der, ebenfalls durch eine Ausnehmung 1a im Kugelkupplungsgehäuse 1 hindurchgeführt, die jeweilige Verschiebestellung des Keilspaltelementes 16 anzeigt. Die den Positionsstift 19 umfassende, gegen die Innenwand des Kugelkupplungsgehäuses 1 abgestützte Feder21 hält das Keilelement 16 in der in Figur4 dargestellten, durch Herunterdrücken der Stellhebel 10 bewirkten Stellung, in der das Keilspaltelement 16 unter Beaufschlagung der Rückwand 15c des Hydraulik-Spannelementes 15 dieses mit seinem Druckglied 15b gegen die Rückwand 3a des Teilabschnittes 3 und diesen gegen die Kupplungskugel 2 drückt. Der Teilabschnitt 3 wird, wie sich aus Figur 5 ergibt, dadurch in die Entkupplungsposition gebracht, daß beim Anheben der Stellhebel 10 zunächst der mit diesen lenkverbundene Schaltstift 18 das Druckschaltelement des Hyraulik-Spannelementes 15 betätigt und damit die Abschaltung des Spanndrucks bewirkt. Das auf diese Weise, ähnlich wie beim Ausführungsbeispiel nach den Figuren 1 bis 3 freigegebene Keilspaltelement 16 bewegt sich dann beim weiteren Anheben der Stellhebel 10 in die, in Figur 5 dargestellte Freigabestellung Das Hydraulik-Spannelement 15 schwenkt bei dieser Bewegung des Keilelementes 16 um die Achse 13 in die, in Figur 5 dargestellte Stellung, bei der das Keilspaltelement 16 in eine auf der Rückwand 15c des Gehäuses 15a angeordnete Rastkante 15e einfährt. Der mit seiner Rückwand 3a auf dem Druckglied 15b aufliegende Teilabschnitt 3 folgt dieser Schwenkbewegung des Hydraulik-Spannelementes 15, um die Achse 4 schwenkend unter der Wirkung einer hier nicht dargestellten Feder, die der Rückzugfeder 12 des Ausführungsbeispiels nach Figur 1 bis 3 entspricht. Die Rückbewegung des Hydraulik-Spannelementes 15 und des Keilspaltelementes 16 in die Stellungen der Kupplungsposition nach Figur4 erfolgt durch Absenken der Stellhebel 10 unter Unterstützung der beiden Federn 17 und 21.

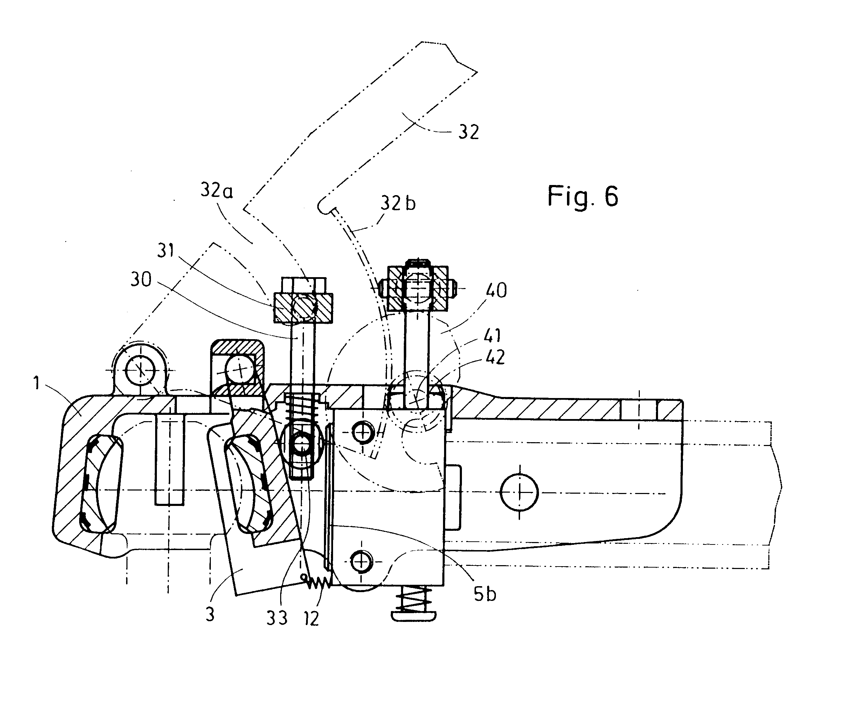

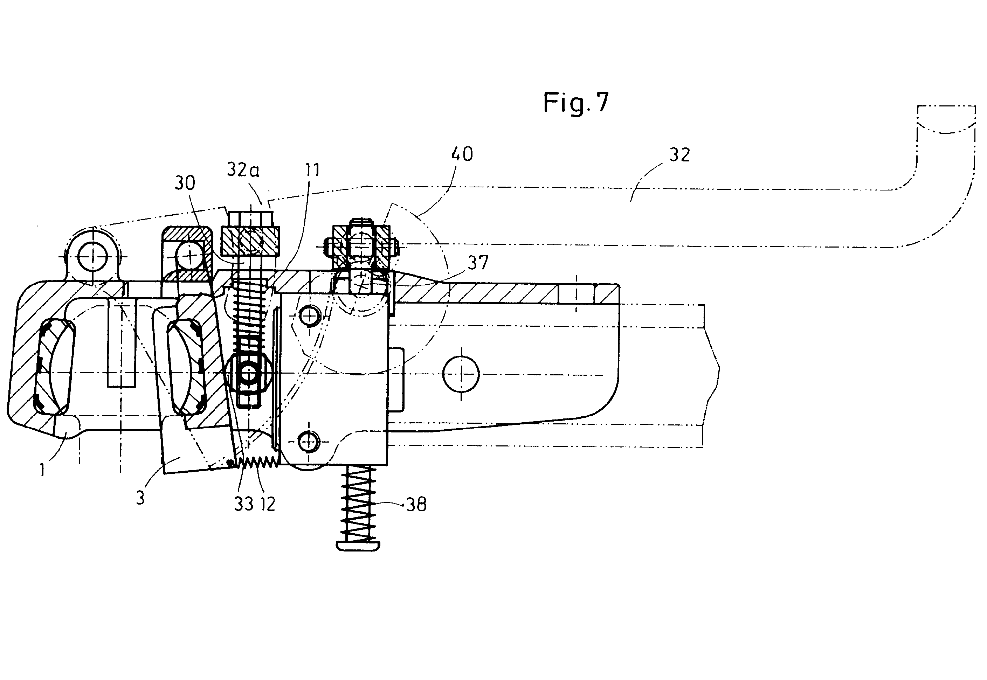

In der Kupplungsposition zeigt der Positionsstift 19 durch entsprechende Markierungen einmal, daß die Kupplungselemente ihre Kupplungsposition erreicht haben weiter die Größe des an der Auflagefläche des Teilabschnittes 3 eingetretenen Reibungsverschleißes. Bei den Ausführungsbeispielen nach den Fig. 6 bis 11 sind die den Schaltsiften 7 des Ausführungsbeispiels nach Fig. 1 entsprechenden, ebenfalls stiftförmigen Hubglieder 30 an ihren oberen Enden mit einer gemeinsamen Traverse 31 verbunden deren beide Enden 31a in Schlitzführungen 32a der, strichpunktiert wiedergegebenen, am Kugelkupplungsgehäuse 1 angelenkten Stellhebel 32 eingreifen. Diese Hubglieder 30 stehen ebenso wie die erwähnten Schaltstifte 7 der Ausbildung nach Fig. 1 unter dem Druck einer gegen das Kugelkupplungsgehäuse 1 abgestützten Feder 11. Bei derAusbildung nach den Fig. 6 und 7 bestehen die Keilspaltelemente aus mehreren, gleichachsig in den Hubgliedern 30 gelagerten Rollen 33, deren die Andruckflächen des Teilabschnitts 3 und des Druckgliedes 5b beaufschlagender Umfang oval verläuft. Wie sich aus der Darstellung nach Fig. 7 ergibt, erlaubt es diese Ovalform, den Schwenk-und damit den Stellweg des Teilabschnitts 3 zu vergrößern.

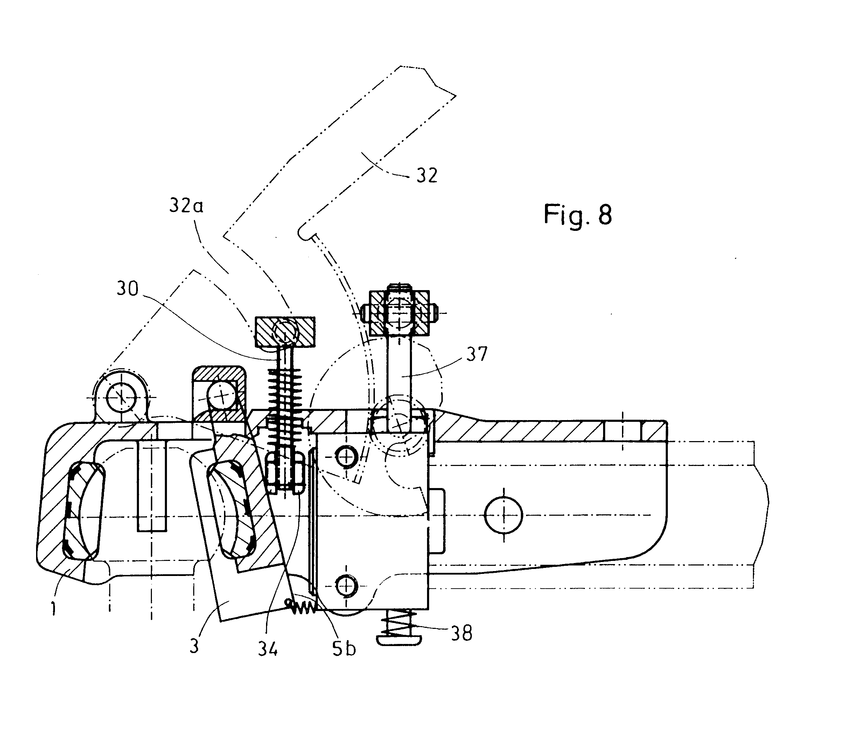

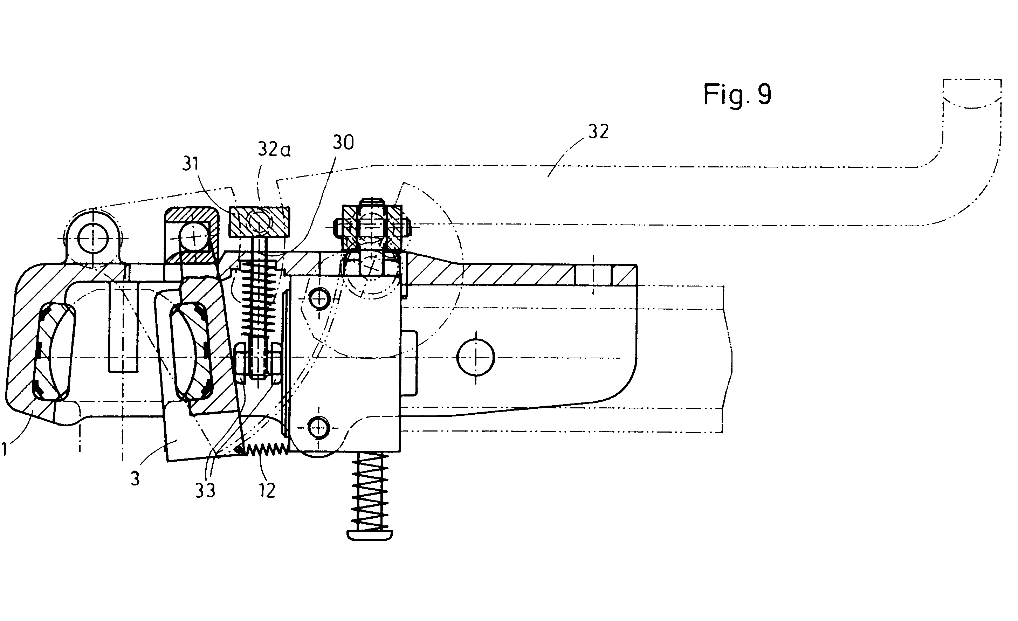

Bei der Ausbildung nach den Fig. 8 und 9 bestehen die Keilspaltelemente aus einem oder mehreren, achsparallel nebeneinander in den Hubgliedern 30 gelagerten Rollenscheibenpaaren 34, deren Scheibenflächen jeweils eine der beiden Andruckflächen des Teilabschnitts 3 bzw. des Druckgliedes 5b beaufschlagen. Die den Andruckflächen zugewandten Ränder der beiden Rollenscheiben 34 sind abgerundet. Auch mit der Ausbildungsform läßt sich der Stellweg vergrößern insb. dann, wenn zusätzlich die Rollenscheiben des Paares in gegenläufigen Gewinden in dem Hubglied 30 lagern und ggfs. drehangetrieben werden, weil sich damit der Abstand der beiden Scheiben voneinander verändernd vergrößern oder verkleinern läßt.

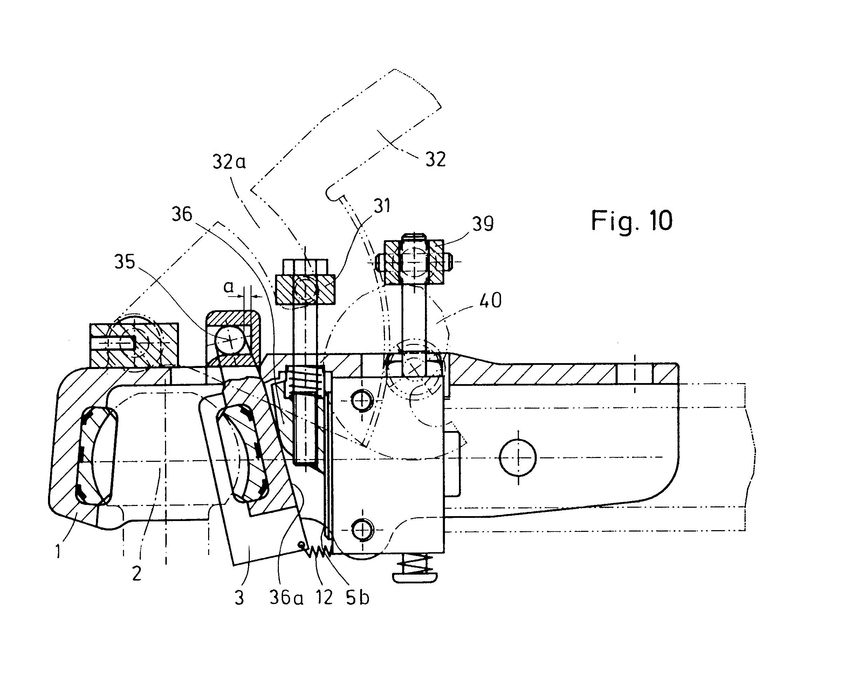

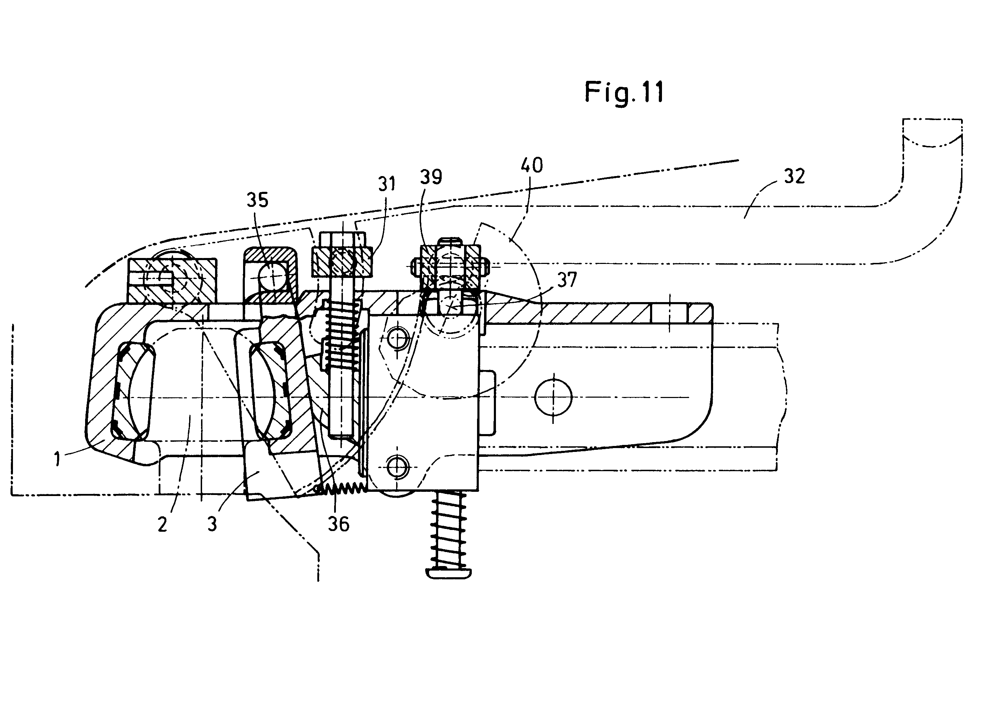

Bei dem Ausführungsbeispiel nach den Fig. 10 und 11 besteht das Keilspaltelement aus einem Keilklotz 36 dessen Keilflächen etwa parallel zu den Andruckflächen des Teilabschnitts 3 bzw. des Druckgliedes 5b verlaufen und die Schwenkachse 35, an der der Teilabschnitt 3 im Kugelkupplungsgehäuse 1 pendelbar aufgehängt ist, querverschieblich angeordnet. Die die Andruckfläche des Teilabschnitts 3 beaufschlagende Keikfläche des Keilklotzes 36 ist in ihrem unteren Bereich 36a kurvenförmig so abgerundet, daß die Schwenkachse 35 beim Anheben des Keilklotzes 36 aus der in Fig. 11 wiedergegebenen Kupplungsposition mit der strichpunktiert dargestellten Kupplungskugel 2 in die, in Fig. 10 wiedergegebene Endkupplungsposition aus ihrer Stellung nach Fig. 11 unter dem Zug der Feder 12 am unteren Teil des Teilabschnitts 3 heraus nach außen quer verschoben wird. Diese Anordnung bringt den Vorteil mit sich, daß die Anschlagfläche des Teilabschnitts 3 beim Einfahren des Keilklotzes 36 nach unten, wie dies aus Fig. 11 hervorgeht, plan an der, der Andruckfläche des Teilabschnitts 3 zugewandten Keilfläche des Keilklotzes 36 anliegt und damit ein einwandfreier Kupplungsschluß gewährleistet ist.

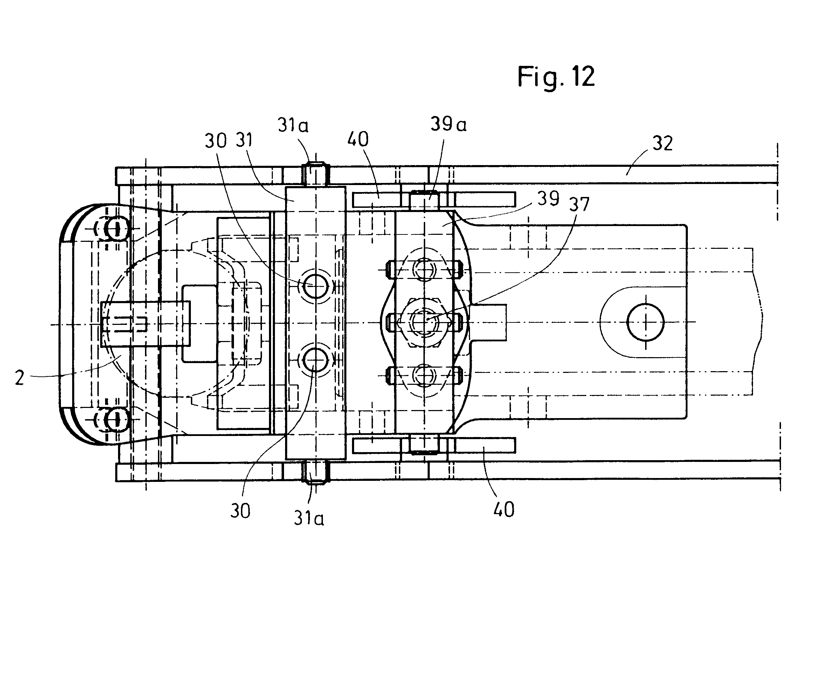

Aus den Fig. 7 bis 12 geht weiter hervor, daß den Schaltstiften 8 nach dem Ausführungsbeispiel nach Fig. 1 entsprechende Hubglieder 37 nach oben durch das Kugelkupplungsgehäuse 1 geführt und gegen dieses durch Federn 38 abgestützt sind. Die oberen Enden dieser Hubglieder 37 sind (vgl. Fig. 12) mit einer gemeinsamen Traverse 39 verbunden. Die beiden unteren Enden befindlichen Gleitanschläge 39a werden von einem Kurvenscheibenpaar 40 geführt, das im Kugelkupplungsgehäuse 1 gelagert ist und auf dessen Drehachse 41 Zahnritzel 42 sitzen, die mit Zahnsegmenten 32b kämmen, die an den Stellelementen 32 vorgesehen sind. Mit dieser Ausbildungsform lassen sich die Schaltwege für Betätigung der Druckschaltelemente vergrößern und die Einschaltgenauigkeit verbessern.

### Liste der Bezugszeichen

1 Kugelkupplungsgehäuse
1a Ausnehmungen
1c Schlitzführungen
1 h Hängeschale
2 Kupplungskugel
3 Teilabschnitt
3a Rückwand (des Teilabschnitts)
4 Schwenkachse
5 Hydraulik-Spannelement
5a Gehäuse (des Hydraulik-Spannelementes)
5b (bewegliches) Druckglied
6 Keilspaltelement
7 Schaltstift
7a Ringbund
8 Schaltstift
8a Ringbund
9 U-Winkelstück
9a Zapfenansatz
9b Stegteil
10 Stell-Hebelpaar
10a Ansatzstück
11 Feder
12 Rückzugfeder
13 Achse
14 Hydraulik-Spannelement
15 Hydraulik-Spannelement
15a Gehäuse (des Hydraulik-Spannelementes)
15b Druckglied
15c Rückwand
15e Rastkante
16 Keilspaltelement
17 Feder
18 Schaltstift
19 Positionierstitft
20 Feder
21 Feder
22 Lenker
30 Hubglieder
31 Traverse
31a Enden (der Traverse)
32 Stellhebel
32a Schlitzführungen
32b Zahnsegment
33 Rollen
34 Rollenscheiben
35 Schwenkachse
36 Keilklotz
37 Hubglied
38 Federn
39 Traverse
39a Gleitanschläge (der Traverse)
40 Kurvenscheibenpaar
41 Drehachse
42 Zahnritzel
H (Doppelpfeil)
d (Abstand)
a (Abstand)

## Patentansprüche

1. Fahrzeug-Anhängerkupplung mit Reibungsbremse, bestehend aus einer Kupplungskugel und einem, diese umfassenden Kugelkupplungsgehäuse, bei der ein kugelabschnittsförmiger Teilabschnitt des Kugelkupplungsgehäuses über Stellelemente aus einer Entkupplungsposition unter Spanndruck gegen die Kupplungskugel in eine Kupplungsposition und aus dieser zurück beweg- und in der Kupplungsposition, dabei als Reibungsbremsklotz wirkend zusätzlich mit einstellbarem Druck beaufschlagbar ist, gekennzeichnet durch, ein hinter dem Teilabschnitt (3) des Kugelkupplungsgehäuses (1), diesen mit seinem Druckglied (5b; 15b) direkt oder indirekt beaufschlagendes mit seinem Gehäuse (5a; 15a) ortsfest, längsverschiebbar oder schwenkbar im Kugelkupplungsgehäuse (1) angeordnetes Hydraulik-Spannelement (5; 15).

2. Fahrzeug-Anhängerkupplung nach Anspruch 1, gekennzeichnet durch, zwischen dem Teilabschnitt (3) und dem Druckglied (5b) des (ortsfesten) Hydraulik-Spannelementes (5) bzw. hinter dem Gehäuses (15a) des (längs verschieblichen oder schwenkbaren) Hydraulik-Spannelement (15) angeordnete, die Andruckflächen des Teilabschnitts (3) bzw. des Hydraulik-Spannelementes (5) beaufschlagende Keilspaltelemente (6, 33, 34, 36), die über die Stellelemente (10) aus einer, den Teilabschnitt (3) bzw. diesen zusammen mit dem (längsverschiebbaren oder schwenkbaren) Hydraulik-Spannelement (15) in die Kupplungsposition drückenden Stellung in eine, dem Teilabschnitt (3), dessen Rückbewegung in die Entkupplungsposition freigebende Stellung und zurück verschiebbar sind.

3. Fahrzeug-Anhängerkupplung nach Anspruch 2, gekennzeichnet durch, mit den Keilspaltelementen (6,16, 33, 34, 36) verbundene, nach oben durch das Kugelkupplungsgehäuse (1) geführte, gegen dieses federabgestützte, von der Stellelementen (10) anhebbare Hubglieder (30).

4. Fahrzeug-Anhängerkupplung nach Anspruch 3, dadurch gekennzeichnet, daß die oberen Enden der Hubglieder (30) mit einer gemeinsamen Traverse (31) verbunden sind, deren beide Enden (31a) in Schlitzführungen (32a) der Stellelemente (10, 32) eingreifen.

5. Fahrzeug-Anhängerkupplung nach einem oder mehreren der Ansprüche 2 bis 4, dadurch gekennzeichnet, daß die Keilspaltelemente aus Keilklötzen (6, 36) bestehen, deren Keilflächen etwa parallel zu den Andruckflächen des Teilabschnitts (3) bzw. des Hydraulik-Spannelementes (5) verlaufen.

6. Fahrzeug-Anhängerkupplung nach einem oder mehreren der Ansprüche 2 bis 4, dadurch gekennzeichnet, daß die Keilspaltelemente aus einer oder mehreren gleichzeitig in den Hubgliedern (30) gelagerten Rollen (33) bestehen.

7. Fahrzeug-Anhängerkupplung nach Anspruch 6, dadurch gekennzeichnet, daß der, die Andruckflächen des Teilabschnitts (3) und/oder des Druckglieds (5b) beaufschlagende Umfang der Rollen (33) oval verläuft.

8. Fahrzeug-Anhängerkupplung nach einem oder mehreren der Ansprüche 2 bis 4, dadurch gekennzeichnet, daß die Keilspaltelemente aus einem oder mehreren, achsparallel nebeneinander in den Hubgliedern (30) gelagerten Rollenscheibenpaaren (34) bestehen, deren Scheibenflächen jeweils eine der beiden Andruckflächen beaufschlagen.

9. Fahrzeug-Anhängerkupplung nach Anspruch 8, dadurch gekennzeichnet, daß die Rollenscheiben (31) eines Paares in gegenläufigen Gewinden in dem Hubglied (30) lagern.

10. Fahrzeug-Anhängerkupplung nach dem Ansprüchen 8 und/oder 9, dadurch gekennzeichnet, daß die Rollenscheiben (34) drehantreibbar sind.

11. Fahrzeug-Anhängerkupplung nach einem oder mehreren der Ansprüche 8 bis 10, dadurch gekennzeichnet, daß die, den Andruckflächen zugewandten Ränder der Rollenscheiben (34) abgerundet sind.

12. Fahrzeug-Anhängerkupplung nach einem oder mehreren der Ansprüche 2 bis 4, bei der der Teilabschnitt mit einer, aus einer Stellung in der Kupplungsposition heraus quer verschiebbaren Schwenkachse im Kugelkupplungsgehäuse aufgehängt, mittels an diesem und an seinem unteren Ende befestigten Federn in der Endkupplungsposition gehalten wird, dadurch gekennzeichnet, daß die, die Andruckfläche des Teilabschnitts beaufschlagende Keilfläche eines keilförmigen Keilspaltelementes (36) in dessen unteren Bereich so kurvenförmig abgerundet verläuft, daß die Schwenkachse (35) beim Anheben des Keilspaltelementes (36) und Einschwenken des Teilabschnitts (3) in die Endkupplungsposition aus ihrer Stellung heraus nach außen quer verschoben wird.

13. Fahrzeug-Anhängerkupplung nach einem oder mehreren der Ansprüche 2 bis 12, gekennzeichnet durch ein, von den Stellelementen (10, 32) betätigbares Druckschaltelement, das den Spanndruck des Hydraulik-Spannelementes (5; 15) während des Verschiebung des Keilspaltelementes (6, 16) in die Freigabestellung schaltet.

14. Fahrzeug-Anhängerkupplung nach Anspruch 13, gekennzeichnet durch mit dem Druckschaltelementverbundene, nach oben durch das Kugelkupplungsgehäuse geführte, gegen dieses federabgestützte Hubglieder (37), deren obere Enden mit einer gemeinsamen Traverse (39) verbunden sind, die an beiden Enden, von, im Kugelkupplungsgehäuse (1) gelagerten Kurvenscheiben (40) geführte Gelitanschläge (39a) aufweist.

15. Fahrzeug-Anhängerkupplung nach Anspruch 14, dadurch gekennzeichnet, daß auf der Drehachse (41) der beiderseits der Kugelkupplungsgehäuses (1) angeordneten Kurvenscheiben (40) Zahnritzel (42) sitzen, die mit, an den Stellelementen (10, 32) angeordneten Zahnsegmenten (32b) kämmen.

16. Fahrzeug-Anhängerkupplung nach Anspruch 13, dadurch gekennzeichnet, daß das Druckschaltelement durch Ausnehmungen (1a, 1b) des Kugelkupplungsgehäuses (1) geführte Schaltstifte (7, 8) aufweist, die von einer mit den Stellelementen (10) verbundenen, gemeinsamen Hubtraverse (9) entgegen der Wirkung von Federelementen (11, 12) nacheinander anhebbar sind.

17. Fahrzeug-Anhängerkupplung nach Anspruch 13, dadurch gekennzeichnet, daß das Druckschaltelement einen, durch eine Ausnehmung (1 b) des Kugelkupplungsgehäuses (1) geführten, entgegen der Wirkung einer Spannfeder (17) des Hydraulik-Spannelementes (15) anhebbaren Schaltstift (19) aufweist, der mit den Stellelementen (10) lenkverbunden ist.

18. Fahrzeug-Anhängerkupplung nach Anspruch 13, dadurch gekennzeichnet, daß das Keilspaltelement (16), in seitlichen Schlitzführungen (1c) des Kugelkupplungsgehäuses (1) geführt, mit den Stellelementen (10) lenkverbunden ist.

19. Fahrzeug-Anhängerkupplung nach Anspruch 18, gekennzeichnet durch eine, in der Gehäuserückwand (15c) des Hydraulik-Spannelementes (15) angeordnete Rastkante (15e) für das Keilspaltelement (16) in dessen, die Bewegung des Teilabschnitts (3) in die Endkupplungsposition freigebende Stellung.

20. Fahrzeug-Anhängerkupplung nach Anspruch 18 und/oder 19, gekennzeichnet durch einen, mit dem Keilelement (16) verbundenen, aus dem Kungelkupplungsgehäuse (1) ragenden, die jeweilige Verschiebestellung des Keilelementes (16) anzeigenden Positionsstift (19).

21. Fahrzeug-Anhängerkupplung nach einem oder mehreren der Ansprüche 1 bis 11, 14, 17, bis 20, dadurch gekennzeichnet, daß der Teilabschnitt und das Hydraulik-Spannelement (15) hintereinander an parallelen Achsen (4, 13) im Kugelkupplungsgehäuse (1) aufgehängt sind, wobei das Druckglied (15b) des Hydraulik-Spannelementes (15) die Rückseite (3a) des Teilabschnitts (3) direkt beaufschlagt.

22. Fahrzeug-Anhängerkupplung nach Anspruch 21, dadurch gekennzeichnet, daß die Achse (4) beweglich, quer zu ihrer Achse hin verschiebbar in einer, mit dem Kugelkupplungsgehäuse (1) verbundenen Hängeschale (1h) aufliegt.
